# EUROPEAN PATENT SPECIFICATION

(11) **EP 2 437 361 B1**
(45) Date of publication and mention of the grant of the patent: **17.05.2017**
(21) Application number: 10012349.6
(22) Date of filing: 30.09.2010
(51) Int. Cl.: H01R 43/055, B23P 21/00, B23P 19/00

(54) **Tooling plate for bearing a toolholder, a toolholder for holding the tool of a workstation, docking station for supporting the workstation and assembly facility for manufacturing electronic equipment comprising the same**
Werkzeugplatte zum Tragen eines Werkzeughalters, Werkzeughalter zum Halten des Werkzeugs an einem Arbeitsplatz, Andockstation zum Stützen des Arbeitsplatzes und Montageanlage zur Herstellung einer elektronischen Gerät damit
Plaque d'outilage pour porter un porte-outil, porte-outil pour maintenir l'outil d'une station de travail, station d'accueil pour supporter la station de travail et installation de l'assemblage pour fabriquer l'équipement électronique les comportant

(43) Date of publication of application: 04.04.2012
(73) Proprietor: Tyco Electronics Belgium EC BVBA, 8020 Oostkamp (BE)
(72) Inventor: De Man, Jos, 9220 Hamme (BE); Vandelanotte, Dirk, 8020 Oostkamp (BE); Jonckheere, Joost, 8310 Brugge (BE); Dobbelaere, Joris, 8730 Beernem (BE)
(74) Representative: Grünecker Patent- und Rechtsanwälte PartG mbB

(56) References cited:
- EP-A1- 0 446 518
- FR-A1- 2 643 514
- US-A- 4 667 398
- US-A- 4 697 318
- US-A- 5 271 139

## Description

The present invention relates to a tooling plate for bearing at least one toolholder of a workstation for manufacturing electronic equipment or the like, comprising an upper side, which is provided with a workstation adapter, an underside, which extends essentially parallel to the upper side and is provided with a docking station adapter, wherein the tooling plate standardized for use in at least two of a prototyping stage, a full automatic high quantity production stage, and a half automatic low quantity production stage in the manufacturing of the electronic equipment. The present invention relates in particular to a tooling plate according to the preamble of claim 1. Such a tooling plate is known from document FR 2 643 514.

The present invention further relates to a toolholder for holding a tool of a workstation for manufacturing electronic equipment or the like, comprising a foot which is adapted for mounting the toolholder on a tooling plate.

Further, the present invention relates to a docking station for supporting a workstation for manufacturing electronic equipment or the like, an assembly facility for manufacturing electronic equipment or the like, and a method of manufacturing electronic equipment or the like.

Electro-mechanical components, like connectors of electric connections, and other electronic equipment are usually produced by various processes, such as assembly of parts, deforming parts, bending, cutting, testing of the parts and printing, etc.

The tooling of a product depends on the needed customers' quantity. When newly developing a product, a manual tooling is built to make prototypes of the new products. When the quantity of products to be produced increases, the production stage is entered. At the beginning of the production stage, semi-automatic production is performed and for high quantity production a full automatic production is performed.

Document US 4,667,398 A relates to a crimping die assembly containing an adjustable applicator which can be used with a pneumatic bench applicator machine as well as with a hand tool. Document FR 2 643 514 describes a workstation for manufacturing electronic equipment, wherein a toolholder is provided with a guidance in order to be slid onto a base plate comprising a blocking member for latching the toolholder. Document US 4,697,318 relates to a system for the manufacture of machine parts in large volume and moderate volume runs, wherein a slide plate is provided with a number of bores and counter bores in order to be secured to interchangeable tooling modules. Document EP 0 446 518 A1 relates to a transport system for a manufacturing probe system which can be quickly retrofitted to run prototype parts as well as lower or high production volumes, wherein a universal support hook is provided and locked in place by an automatic locking device.

In the semi-automatic and the full automatic production stages a tooling different from the manual tooling of the prototype stage is used.

Thus, for each production stage, a new tooling has to be developed that may be based on the tooling of the previous stage, however, must be adapted for the requirements and equipment of the new stage.

Consequently, the technical problem to be solved by the present invention is to provide a system allowing that a tooling or workstation of the prototype stage can be easily adapted for the semi-automatic production stage and for the full automatic production stage.

The initially mentioned tooling plate solves this problem in that the tooling plate comprises a standardized locking member with the help of which it may be locked in a predefined locking position at the docking station, and in that the actuating member is formed as a lever protruding from the tooling plate

The initially mentioned toolholder solves this problem by a foot that is formed complementary to the workstation adapter of the tooling plate according to the present invention.

The initially mentioned docking station solves this problem by comprising at least one tooling plate adapter, which is adapted to hold a tooling plate of the present invention.

The initially mentioned assembly facility solves this problem by comprising at least one of a tooling plate according to the present invention, a toolholder according to the present invention and a docking station according to the present invention.

A method of manufacturing electronic equipment solves this problem by transferring, essentially unchanged, the same tooling for processing the electronic equipment between at least two of a prototyping stage, a full automatic high quantity production stage, and a half automatic low quantity production stage in manufacturing the electronic equipment.

Standardization refers to a uniform specification within a system and within the assembly facilities of various production lines, from manual prototype stage over the semi-automatic up to the fully-automatic production stage.

By using the standardized tooling plate for bearing the toolholder of a workstation, the workstation comprising the toolholder or the tooling for manufacturing a new product developed in the prototyping stage, which is usually developed and built with manual handling of the parts, can be reused in a semi-automatic module which is loaded and unloaded by an operator, as well as in an automatically loaded and unloaded full automatic production line.

The inventive toolholder is specifically designed with a foot that is formed complementary to the workstation adapter of the inventive tooling plate, which allows for an easy mounting of the toolholder or the tooling, i.e. a toolholder including a tool on the tooling plate.

According to the present invention, the workstation comprises at least the toolholder and a tool. The workstation may comprise further components, e.g. an actuator, a sensor and/or control unit, for example a pneumatic valve unit with an integrated programmable logic controller, for actuating and controlling the tooling.

The workstation can be easily supported on and be mounted to the docking station of the present invention since the docking station comprises at least one tooling plate adapter, which is adapted to hold the tooling plate according to the present invention. Thus, the same workstation mounted on the tooling plate of the present invention, serving as an adapter for mounting a workstation on a docking station, can be easily reused and transferred from docking stations of prototype units with manual handling to docking stations of semi-automatic modules that are loaded and unloaded by an operator as well as to docking stations full automatic high quantity production stages. Hence, the tooling plate, the toolholder, the docking station and the assembly facility of the present invention make possible the transfer of the same tooling for processing the electronic equipment essentially unchanged between at least two, preferable all, of a prototyping stage, a full automatic high quantity production stage, and half automatic low quantity production stage in manufacturing the electronic equipment.

By the present invention, the same tooling can thus be used depending on the needed customer quantity which allows for flexible concepts during the increase in the produced quantities as well as towards the end of the product cycle again on manual operated assemblies to produce lower quantities necessary to deliver spare parts to the customers. Thereby, an optimal payback and cash flow is triggered by the customers' demand since the tooling can be used and reused from the start of the production up to the end thereof, reducing space by running out of programs, allowing an easier transfer of tooling because of the standardized systems, reduce failure rate and limited or reduced validation costs.

By providing the tooling plate with a locking member, the tooling plate, preferably mounted with the toolholder, the tooling or the workstation, can be easily fixed and secured at the docking station. Since the locking member is standardized, reusing and locking the same tooling, mounted on the tool plate in a predefined locking position on assembly units from a prototype stage, a semi-automatic production stage and the full automatic production stage can be easily achieved.

A lever has the advantage that it combines an easy construction with a secure and failure proof working of the actuating member, whereby the actuating member is easily accessible from the outside since the lever protrudes from the tooling plate.

The solution according to the invention may be further improved and may be combined in any way with the following further advantageous embodiments.

According to a first embodiment of the tooling plate, the docking station adapter comprises at least one standardized guiding member defining a sliding direction of the tooling plate, which guiding member is slideable onto a counter guiding element of a docking station in the sliding direction. The guiding member allows for an easy and efficient fitting of the tool ing plate into or onto a docking station, e.g. a docking station of an assembly unit for prototyping or of a semi-automatic module or of a fully automatic production facility. As the guiding member defines a sliding direction, the tooling plate, in particular the tooling plate having an assembled workstation mounted thereon, can be easily guided to and be arranged in its predetermined position on the docking station.

According to a further embodiment of the tooling plate, the guiding member is formed as a notch at the underside, and an end of the notch opens towards the front side of the tooling plate. Notches can be easily manufactured with high precision and since the notch opens towards the front side of the tooling plate, the fitting of the tooling plate onto the docking station is facilitated because the notch forming the guiding member of the tooling plate can be easily aligned with the counter guiding element of the docking station by simply sliding the tooling plate with respect to the docking station and thereby introducing the counter guiding member through the open end into the notch of the tooling plate.

According to a further embodiment, the locking member comprises a repeated lockable and un-lockable locking element. In the locking position, the locking member meshes with the counter locking element formed at the docking station. The locking member achieves a secure locking and fixation of the tooling plate at the docking station. Further, the locking element of the locking member at the tooling plate meshes with or engages with the counter locking element at the docking station, allowing for an easy assembling and disassembling. In one embodiment that allows for a secure, yet lockable and un-lockable embodiment, the locking element can be formed in a constructionally simple manner, as a detent.

In a further embodiment, the locking member comprises an activating member for unlocking the locking member, which actuating member can be actuated in a manual and/or automatic manner. Providing the locking member with an actuating member allows for, e.g. in embodiments where the locking element is difficult to access, an easy unlocking of the locking member and disassembly of the tooling plate from the docking station. Since the actuating member can be actuated in a manual and/or automatic manner, the tooling plate of this embodiment can be unlocked either by hand or by using a disassembling apparatus.

According to a further embodiment, the locking member forms a limit stop at least partially defining an end-position of the tooling plate. This embodiment ensures that the tooling plate is mounted in the proper position on the docking station and cannot be slid, with respect to the docking station, further than intended, thereby securing a proper handling and mounting of the tooling plate on the docking station and avoiding improper mounting.

According to a further embodiment of the tooling plate, the workstation adapter comprises at least one standardized adapter element at the upper side, which allows for a mounting of the workstation in an easy and reusable way to the adapter element. Standardizing the adapter element allows for a simple, yet secure and arbitrarily exchangeable mounting of the toolholder of a workstation on the tooling plate. Thereby, the tooling plate can be used as a support for different workstations.

In a further embodiment, several standardized adapter elements may be arranged in a standardized symmetrical manner, whereby a component of the workstation is securely mounted in a predetermined position on the tooling plate.

The invention will now be described in more detail by way of example, using advantages embodiments and by reference to the accompanying drawings. The described embodiments are only preferred configurations in which the individual features may, as described above, be implemented independently of each other or may be omitted. Corresponding elements illustrated in the drawings are provided with the same reference signs. Parts of the description relating to the same elements illustrated in different drawings are omitted.

In the drawings:
- Fig. 1: is a schematic perspective view of an upper side of a tooling plate according to an embodiment of the present invention;
- Fig. 2: is a schematic perspective view of an underside of the tooling plate shown in Fig. 1;
- Fig. 3: is a schematic perspective view of a workstation according to an embodiment of the present invention, the workstation is supported on the tooling plate shown in Figs. 1 and 2;
- Fig. 4: is a front view of a control device of the workstation illustrated in Fig. 3;
- Fig. 5: is a schematic perspective view of an assembly device for prototypes, the assembly device is equipped with a docking station for supporting a tooling plate according to an embodiment of the present invention.
- Fig. 6: is a schematic perspective view of a detail of the docking station shown in Fig. 5;
- Fig. 7: is a schematic perspective view of a semi-automatic modular facility according to an embodiment of the present invention for manufacturing electronic equipment of the like;
- Fig. 8: is a schematic perspective view of a product carrier with integrated part detection according to an embodiment of the present invention;
- Fig. 9: is a schematic representation of a semi-automatic assembly facility according to an embodiment of the present invention; and
- Fig. 10: is a schematic representation of a fully-automatic assembly facility according to an embodiment of the present invention.

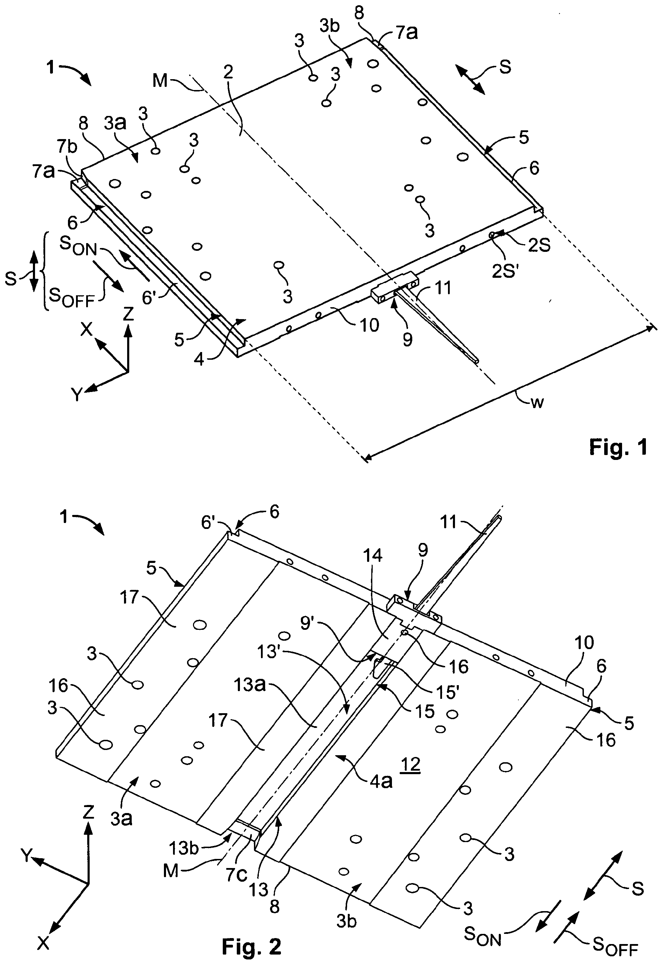

As shown in Fig. 1, a tooling plate 1 according to an embodiment of the present invention may have a rectangular shape. An upper side 2 of the tooling plate 1 may be provided with several preferably standardised adapter elements 3. In the present embodiment the adapter elements 3 are formed as holes.

Two groups 3a, 3b of adapter elements are arranged in a mirror-inverted manner with respect to a middle axis M running essentially in parallel to a length direction X of the tooling plate 1. The symmetrical arrangement of the two groups 3a, 3b of adapter elements 3 with respect to the middle axis M forms a workstation adapter 4 which is adapted to support a workstation 18 (not yet shown) for manufacturing electronic equipment 49 (not yet shown) or the like.

Further, side faces 5 of the adapter plate 1 comprise fixing elements 6 which are formed as rails 6' in the embodiment shown in Fig. 1. The fixing elements 6 are arranged at the side face 5 of the adapter plate 1 and may laterally protrude from the side face 5 in a width direction Y of the adapter element. The width direction Y runs perpendicularly to the length direction X in the plane of the tooling plate.

The fixing elements 6 contribute in defining a sliding direction S of the tooling plate 1. The sliding direction S runs essentially in parallel to the length direction X. The sliding direction S may be further differentiated as comprising a slide-on direction Sₒₙ and slide-off direction S_{off}. The tooling plate 1 may be slid onto a docking station 34 (not yet shown) in the slide-on direction Sₒₙ and may be slid off from the docking station 34 in the slide-off direction S_{off}. For facilitating to slide-on the tooling plate 1, that may also be referred to as mounting or adapter plate, the fixing element 6 and the side face 5 are provided with a bevel 7a, 7b respectively, in the vicinity of a front side, preferably the front edge 8 of the tooling plate 1. The bevels 7a, 7b facilitate to mount the tooling plate 1.

Further, the tooling plate 1 comprises a locking member 9. The locking member 9 forms a limit stop 9' that at least partially defines the end position E (not shown in Fig. 1 and 2) of the tooling plate 1. The locking member protrudes from a back side 10 of the tooling plate 1 in the slide-off direction S_{off}. An actuating member 11 of the locking member 9 is formed as a lever 11', which further protrudes from the locking member 9 in the slide-off direction S_{off}. The actuating member 11 may be actuated manually or automatically in order to unlock the locking member 9.

Fig. 2 is a schematic perspective view of an underside 12 of the tooling plate 1.

The underside 12 is provided with a docking station adapter 4a comprising at least one guiding member 13 having, in the embodiment shown in Fig. 2, the form of a notch 13' extending in parallel to the sliding direction S and being located symmetrically the middle axis M with respect to the width direction Y. In other words, the guiding member 13 may be designed as a central guiding rail 13a.

In the vicinity of the front edge 8 of the tooling plate 1, the guiding member 13 is provided with a bevel 7c which facilitates to slide-on the tooling plate 1 on to a docking station 34 (not yet shown). In the vicinity of the backside 10 of the tooling plate, the guiding member 13 comprises and is preferably terminated by the locking member 9. In particular, a lock 14 of the locking member 9 is situated within the guiding member 13. The lock 14 comprises a locking element 15 having the form of a detent 15' or a snap-in nose. The locking element 15 and the lever 11 may be formed as one piece. In each case, they may be arranged such that they are pivotable around a fulcrum 16 forming a pivot point for the locking element 15 and the lever 11. The fulcrum 16 may be simply formed as a bolt.

Further, in Fig. 2 it becomes evident that the adapter elements 3 are formed as through-holes which extend through the tooling plate 1 along a height-direction Z of the tooling plate 1. The underside 12 may be further provided with gliding elements 17 in the form of ridges or rails which may protrude from the underside 12 against the height-direction Z.

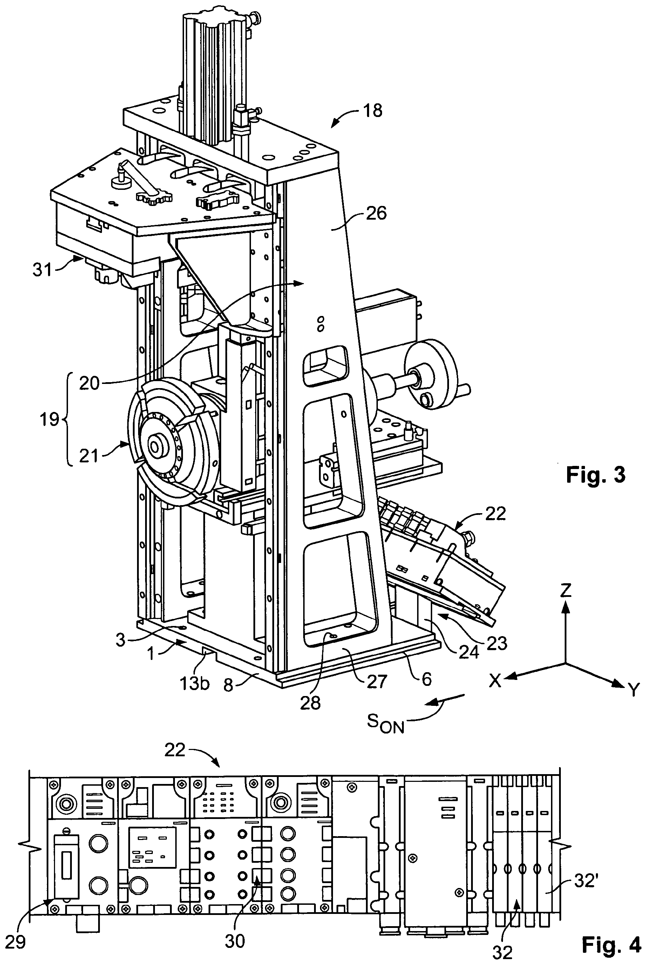

Fig. 3 shows the perspective view of a working station 18 mounted on the tooling plate 1, as shown in Fig. 1 and 2. The workstation 18 comprises a tooling 19 which comprises a tool-holder 20, holding a tool 21 for processing the product. The workstation 18 of the shown exemplary embodiment further comprises a control device 22, the front side of which is shown in detail in Fig. 4. The control device 22 may for example be an actuator 32, here a pneumatic valve unit 32' with an integrated programmable logic controller 29 for controlling the cylinders and the sensors 31 of the workstation 18. The control device 22 is mounted via a fastening means 23, in the embodiment shown in Fig. 3, clamps 24 to the tooling plate 1, in Fig. 3, to the back side 10 of the tooling plate 1.

The back side 10 of the tooling plate 1 may be provided with attachment elements 25, in the embodiment shown in Fig. 1 and 2, attachment holes 25', to which the fastening means 23 for mounting the control device 22 can be attached and to which the fastening means 23 may be fixed, for example by a bolt or a screw.

The toolholder 20 comprises a frame 26 for supporting and holding the tool 21. The tool-holder, preferably the frame 26 thereof, comprises a foot 27 that is adapted for mounting the toolholder 20 on the tooling plate 1 thereof. For mounting, the foot 27 is formed complementary to the workstation adapter 4, that is, in the shown embodiment, to the adapter elements 3 of the tooling plate 1. Therefore, the foot 27 is provided with several fixation holes 28 that can be brought into alignment with the through-holes forming the adapter elements 3, so that the workstation 18, in particular, the foot 27 of the toolholder 20 of the tooling 19 can be fixed on the workstation adapter 4 by extending a fastening means, such as a bolt or a screw (not shown) through the fixation holes in the foot 27 and the adapter elements 3.

In summary, the workstation 18 mounted on the tooling plate 1, as shown in Fig. 3, has the advantage that wherever the workstation is used, the programs stored in the control device 22, here the integrated programmable logic controller 29, and the hardware stay within the same tooling 19 and workstation 18. This has the advantage that the same workstation 18 can be reused from the prototyping stage I up to the semi-automatic II and the fully-automatic III production stage for performing the same process developed in the prototyping stage.

Fig. 4 depicts a front view of a control device 22, showing the programmable logic controller 29, various input and/or output connections 30 for a communication between the control device 22 and the tooling 19, e.g. the tool 21 or a sensor 31 thereof, as well as for receiving data from and sending data to another device, such as a further process information processing system.

The control device 22 further comprises pneumatic valves 32' forming the actuator 32 for moving the cylinders of the tooling 19.

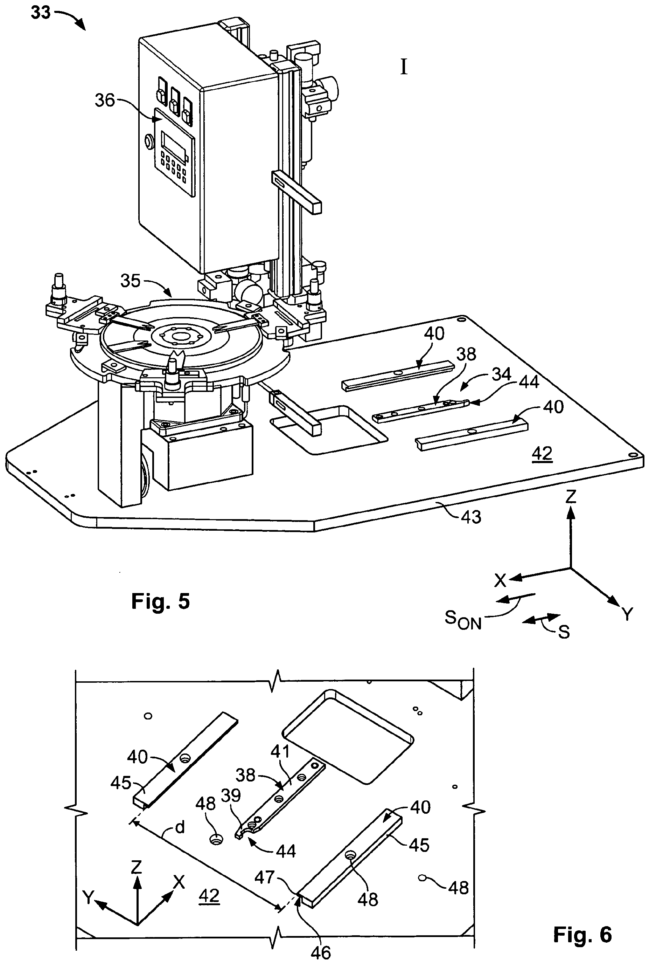

Fig. 5 is schematic perspective view of an assembly unit or device 33 for prototyping and producing electronic equipment in the prototyping stage I in low volumes. The assembly device 33 is equipped with a docking station 34 for supporting a tooling plate 1 according to the present invention. The assembly device 33 further comprises a carrier or holder 35 and an operator interface 36. For assembling the assembly unit 33 to an assembly facility 37 for prototyping, the workstation 18 supported on the tooling plate 1, as shown in Fig. 3, is fitted into the docking station 34 of the assembly device 33 shown in Fig. 5.

For fitting, the tooling plate 1 is slid along the slide-on direction Sₒₙ into the docking station 34 to a defined locking position L (not shown in Fig. 5). In the locking position L, the tooling plate 1 is locked at the docking station 34 and thereafter connected to the operator interface 36. This can be done by connecting the operator interface 36 with the connections 30 of the control device 22 either wirelessly or by using cable connections. Next, the products are placed on the carrier 35 and the operator may start the production by initiating the productions instructions at the operator interface 36 which instructions are transferred to the logic controller 29 of the control device 22, and from the controller 22 to the actuators 32, which move the tooling and process the product.

Fig. 6 shows a schematic perspective view of the detail of the docking station 34 shown in Fig. 5. The docking station 34 comprises a counter guiding element 38 with a counter locking elements 39 and a tooling plate adapter 40, which is adapted to hold a tooling plate 1 of the present invention.

The counter guiding element 38 is formed as a guide rail 41 that is arranged on the surface 42 of the table or base plate 43 of the docking station 34. The guide rail extends substantially along the length direction X in the plane of the table 43. The guide rail 41 can be introduced into the notch 13' of the tooling plate 1, so that the guidance 13, formed by the guiding member 13 and the counter guiding element 38 of the docking station 34, defines the sliding direction S. At the locking end 44 facing against the slide-on direction Sₒₙ of the docking station 34, the guide rail 41 is provided with a counter locking element 39 that meshes with the locking element 15 of the locking member 9 of the tooling plate 1. The counter locking element 39 is formed as a detent 39', that can be engaged with the detent 15' of the locking member 9 of the tooling plate 1, providing an attachable and detachable locking means 15', 39'.

On the top surface 42 of the table 43 of the docking station 34, further, two tooling plate adapters 40 are arranged. The tooling plate adapters 40 are formed as adapter rails 45 that run substantially parallel to the guide rail 41 and are arranged, one on either side of the guide rail 41 in the width direction Y of the table 43. The two adapter rails 45 are spaced apart from each other at a distance d that principally corresponds to the width w of the tooling plate 1. The adapter rails are provided with a groove or channel 46 for receiving the fixing elements 6 formed as rails 6' at the side faces 5 of tooling plate 1. The channels 46 substantially run along the whole length of the adapter rail 45 and are formed at those sides of the adapter rails 45 that face each other. The channel 46 is formed adjacent to the top surface 42 of the table 43 and is covered in the height direction Z by a cover profile 47 that laterally protrudes from the adapter rail 45 of the tooling plate adapter 40 towards a guide rail 41. The channel or groove 46 of the adapter rails 45 is thus bordered by the table 43 and the cover profile 47 against and in the height direction Z, respectively, as well as in the width direction Y by the adapter rail 45. The channel 46 is open towards the guide rail 41 and in the sliding directions S.

Due to this design of the tooling plate adapter 40 having a channel 46, the fixing elements 6 formed as rails 6' of the side faces 5 of the tooling plate 1 can be introduced along the sliding direction S and be slid along the sliding direction S within the channel 46 of the corresponding tooling plate adapter 40, whereby the tooling plate 1 is secured in and against the height direction Z by the table 43 and the cover profile 47, and in and against the width direction Y by the two adapter rails 45.

The docking station 34 is further provided with fixation holes 48 that can be brought into alignment with corresponding holes of the tooling plate 1 to fix the tooling plate 1 to the table 43 of the docking station 34 via, e.g. rulers and screws.

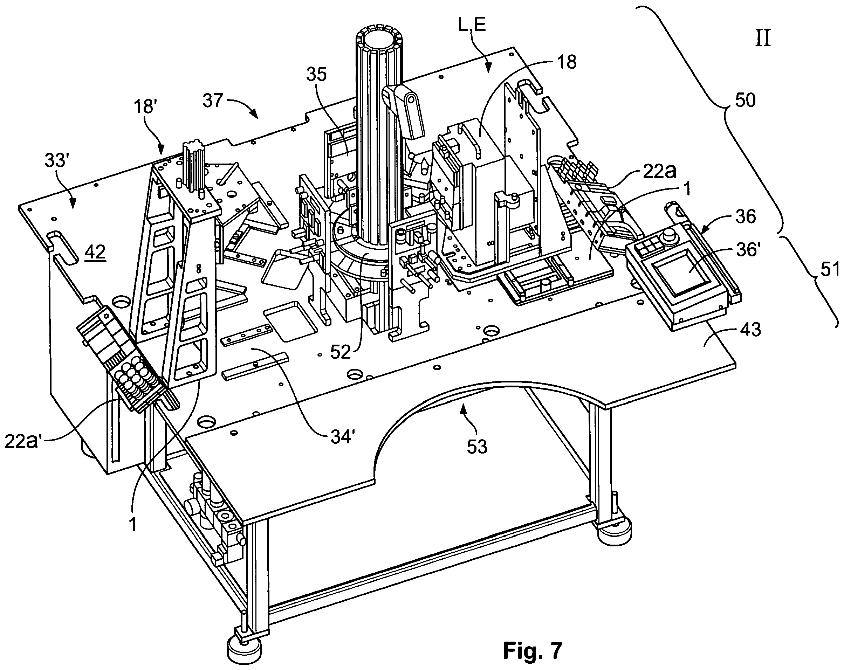

Fig. 7 is a schematic perspective view of an assembly facility 37, here a semi-automatic modular facility 37 for manufacturing electronic equipment 49 or the like in a half-automatic low quantity production stage II. Workstations 18, 18', each supported on a tooling plate 1, can be mounted on docking stations 34, 34' of a semi-automatic assembly unit or device 33' via said tooling plates 1. The assembly device 33' comprises a basic table 43 having a working section 50 and an operating section 51. In the working section 50, principally in the centre thereof, a rotary table 52 with various carriers 35 for holding electronic equipment 49 is provided. Around the rotary table 52, several docking stations 34, 34' are arranged. In the embodiment shown in Fig. 7, two docking stations 34, 34' are placed on opposite of the rotary table 52.

In Fig. 7, a workstation 18 is already supported in one of the docking stations 34 in the locking position L or end position E via the tooling plate 1, which serves as forming the adapter between the docking station 34 and the workstation 18. The other workstation 18' is already assembled and mounted on a tooling plate 1. However, the workstation 18 is not yet mounted on the corresponding docking station 34 of the semi-automatic assembly facility 37.

The operating section 51 is provided with a working or operator place 53 for the operator 58 (not yet shown) as well as an operator interface 36 so that the operator 58, when positioned in the operator place 53 can load and unload the product 49 on and off the carriers 35 and can control the assembly facility 37 at the operator interface 36. The operator interface 36 of the embodiment shown in Fig. 7 serves as a master controller 36' which interacts with slave controller 22a, 22a' of each the workstation 18, 18'. The software of the master controller 36' is standardized and does not change for new projects. In the software, parameters can be set on the operator interface 36 depending on the type of product.

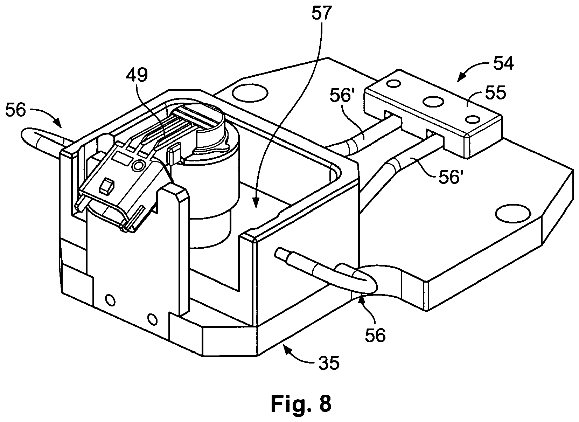

Each carrier 35 of the rotary table 42 is provided with an integrated part detection 54 that is shown in detail in Fig. 8.

The part detection 54 comprises a connection module 55 for outputting a signal to the master controller 36', indicating whether a product piece 49 is placed on the carrier 35 or not. From the connection module 55, sensing elements 56 extend up to a positioning area 57 of the carrier 35, where the electronic equipment 49 to be processed is placed on the carrier 35. The sensing elements 56 may for example be two fibre optic cables 56' that end on adjacent positions of the positioning area 57. Light transmission through the cables 56' is interrupted if electronic equipment 49 is placed in the positioning area 57, and the part detection 54 outputs a signal indicating that electronic equipment 49 is placed on the carrier 35.

The operator 58 loads and unloads the products on the carriers 35 of the rotary table 52, whereby the several workstations 18 of the semi-automatic assembly facility 37 may in parallel, process electronic equipment 49 so that with just one operator, several products can be produced simultaneously. Alternatively, the workstations 18, 18' of the assembly facility 37 can perform subsequent procession step in series.

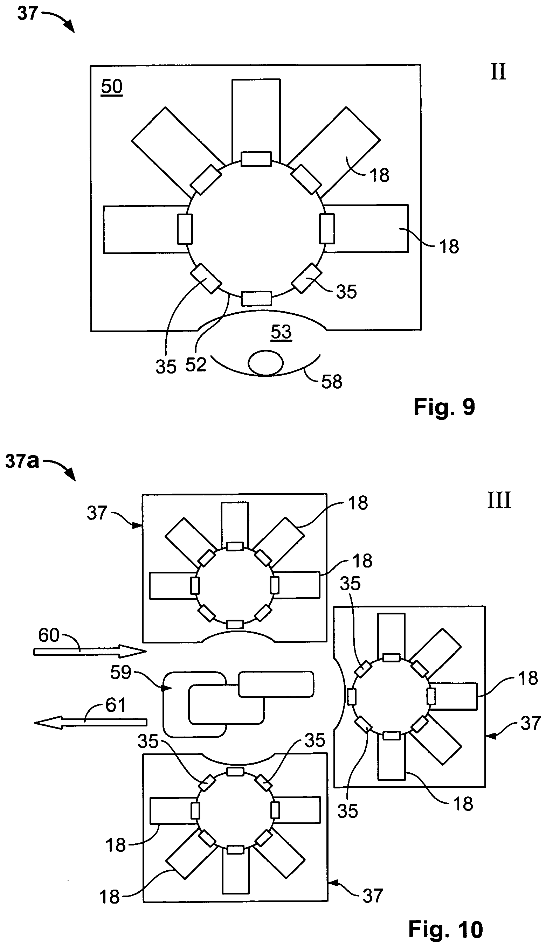

A schematic representation of the semi-automatic assembly facility 37 for a half-automatic production stage II is shown in Fig 9. As can be seen in Fig. 9, an operator 58 is standing in the operator place 53 and loads and unloads the products on the carriers 35, indicated as white boxes, of the rotary table 52. In the embodiment shown in Fig. 9, five workstations 18, indicated as black boxes, are arranged around the rotary table 52 in the working section 50.

Fig. 10 is a schematic representation of the fully-automatic assembly facility 37a allowing for a fully-automatic production stage III of high quantities of electronic equipment 49 to be produced. The fully-automatic assembly facility 37a shown in Fig. 10 comprises three semi-automatic modules 37 of the embodiment shown in Fig. 9, that are placed around a handling system 59. The handling system 59, for example a robot or a pneumatic handling performs the input 60 of all components necessary for processing the product 49 into the assembly facility 37a, the output 61 of the produced electronic equipment 49 out of the facility 37a, as well as the transfer from partially processed products from one semi-automatic assembly facility 37 to another.

The fully-automatic assembly facility 37a, schematically depicted in Fig. 10, further reduces the operator costs for producing high quantities of the electronic equipment 49 and there is less risk of damaging parts due to manual handling since the operator 58 is replaced by the handling system 59.

In the semi-automatic assembly facility 37 as well as in the fully-automatic assembly facility 37a it is possible to perform the same processing of the product at all workstations 18 or it is possible to perform subsequent processing steps in series in adjacent workstations 18 within one semi-automatic assembly facility 37, while passing the electronic equipment to be manufactured within a carrier 35 on a rotary table 52 along the different workstations 18, and/or in the different semi-automatic assembly facility 37 within the fully-automatic facility 37a.

## Claims

1. Tooling plate (1) for bearing at least one toolholder (20) of a workstation (18) for manufacturing electronic equipment (49) or the like, comprising an upper side (2) which is provided with a workstation adapter (4), an underside (12) which extends essentially in parallel to the upper side (2) and is provided with a docking station adapter (4a), wherein the tooling plate (1) is standardized for use in at least two of a prototyping stage (I), a full automatic high quantity production stage (III), and a half automatic low quantity production stage (II) in manufacturing the electronic equipment (49), the tooling plate (1) comprises a standardized locking member (9) with the help of which it may be locked in a predefined locking position (L) at a docking station (34), **characterised in that** the locking member (9) comprises an actuating member (11) for unlocking the locking member (9), which actuating member (11) can be actuated in a manual and/or automatic manner, and **in that** the actuating member (11) is formed as a lever (11') protruding from the tooling plate (1).

2. Tooling plate (1) according to claim 1, **characterised in that** the docking station adapter (4a) comprises at least one standardized guiding member (13) defining a sliding direction (S) of the tooling plate (1), the guiding member (13) is slidable onto a counter guiding element (38) of the docking station (34) in the sliding direction (S).

3. Tooling plate (1) according to claim 2, **characterised in that** the guiding member (13) is formed as a notch (13') at the underside (12), an end (13b) of the notch (13') opening towards a front side (8) of the tooling plate (1).

4. Tooling plate (1) according to one of claims 1 to 3, **characterised in that** the lever (11') protrudes from a back side (10) of the tooling plate (1) in a slide-off direction (S_{off}) in which the tooling plate (1) may be slid off from the docking station (34).

5. Tooling plate (1) according to claim 4, **characterised in that** the locking member (9) comprises a repeatedly lockable and un-lockable locking element (15), in the locking position (L) the locking member (9) meshes with a counter locking element (39) formed at the docking station (34).

6. Tooling plate (1) according to claim 5, **characterised in that** the locking element (15) is formed as a detent (15').

7. Tooling plate (1) according to one of claims 1 to 6, **characterised in that** the locking member (9) forms a limit stop (9') at least partially defining an end-position (E) of the tooling plate (1).

8. Tooling plate (1) according to claim 1, **characterised in that** the workstation adapter (4) comprises at least one standardized adapter element (3) at the upper side (2).

9. Tooling plate (1) according to claim 8, **characterised in that** several standardized adapter elements (3a, 3b) are arranged in a standardized symmetrical manner.

10. Toolholder (20) for holding a tool (21) of a workstation (18) for manufacturing electronic equipment (49) or the like, comprising a foot (27) which is adapted for mounting the toolholder (20) on a tooling plate (1), **characterised in that** the foot (27) is formed complementary to the workstation adapter (4) of a tooling plate (1) according to any one of claims 1 to 9.

11. Docking station (34) for supporting a workstation (18) for manufacturing electronic equipment (49) or the like, **characterised in that** the docking station (34) comprises at least one tooling plate adapter (40) which is adapted to hold a tooling plate (1) according to any one of claims 1 to 9.

12. Assembly facility (37) for manufacturing electronic equipment (49) or the like, **characterised in that** the assembly facility (37) comprises at least one of a tooling plate (1) according to any one of claims 1 to 9, a toolholder (20) according to claim 10, and a docking station (34) according to claim 11.

## Patentansprüche

1. Werkzeugplatte (1) zum Tragen eines Werkzeughalters (20) eines Arbeitsplatzes (18) zur Herstellung eines elektronischen Gerätes (49) oder ähnlichem, umfassend eine Oberseite (2), die einen Arbeitsplatzanschluss (4) aufweist, eine Unterseite (12) die sich im Wesentlichen parallel zur Oberseite (2) erstreckt und mit wenigstens einem Andockstationsanschluss (4a) versehen ist, wobei die Werkzeugplatte (1) standardisiert ist zur Verwendung in wenigstens zwei Plattformen, die eine Prototypenplattform (I), eine voll automatisierte Produktionsplattform (III) zur Produktion von großen Stückzahlen, oder eine halbautomatische Produktionsplattform (II) zu Produktion von geringen Stückzahlen, jeweils des elektronischen Gerätes (49), sein kann, wobei die Werkzeugplatte (1) ein standardisiertes Verriegelungsglied (9) aufweist, mit dessen Hilfe sie in einer vordefinierten Verriegelungsstellung (L) an einer Andockstation (34) verriegelt werden kann, **dadurch gekennzeichnet, dass** das Verriegelungsglied (9) wenigstens ein Betätigungsglied (11) zum Entriegeln des Verriegelungsglieds (9) aufweist, welches manuell und/oder automatisch betätigt werden kann, und welches als Hebel (11') ausgebildet ist, welcher von der Werkzeugplatte (1) hervorspringt.

2. Werkzeugplatte (1) nach Anspruch 1, **dadurch gekennzeichnet, dass** der Andockstationsanschluss (4a) wenigstens ein standardisiertes Führungsglied (13) aufweist, welches eine Schieberichtung (S) der Werkzeugplatte (1) definiert, wobei das Führungsglied (13) auf ein Gegenführungselement (38) der Andockstation (34) in der Schieberichtung (S) schiebbar ist.

3. Werkzeugplatte (1) nach Anspruch 2, **dadurch gekennzeichnet, dass** das Führungsglied (13) als eine Nut (13') an der Unterseite (12) gebildet ist, wobei sich ein Ende (13b) der Nut (13') zu einer Vorderseite (8) der Werkzeugplatte (1) hin öffnet.

4. Werkzeugplatte (1) nach einem der Ansprüche 1 bis 3, **dadurch gekennzeichnet, dass** der Hebel (11') von einer Rückseite (10) der Werkzeugplatte (1) in eine Wegschieberichtung (S_{off}), in der die Werkzeugplatte (1) von der Andockstation (34) weggeschoben werden kann, vorspringt.

5. Werkzeugplatte (1) nach Anspruch 4, **dadurch gekennzeichnet, dass** das Verriegelungsglied (9) ein wiederholt ver- und entriegelbares Verriegelungselement (15) aufweist, wobei das Verriegelungsglied (9) in der Verriegelungsstellung (L) mit einem an der Andockstation (34) ausgebildeten Gegenverriegelungselement (39) in Eingriff steht.

6. Werkzeugplatte (1) nach Anspruch 5, **dadurch gekennzeichnet, dass** das Verriegelungselement (15) als Sperrklinke (15') gebildet ist.

7. Werkzeugplatte (1) nach einem der Ansprüche 1 bis 6, **dadurch gekennzeichnet, dass** das Verriegelungsglied (9) einen Begrenzungsanschlag (9') bildet, der zumindest teilweise eine Endposition (E) der Werkzeugplatte (1) definiert.

8. Werkzeugplatte (1) nach Anspruch 1, **dadurch gekennzeichnet, dass** der Arbeitsplatzanschluss (4) wenigstens ein standardisiertes Anschlusselement (3) an der Oberseite (2) aufweist.

9. Werkzeugplatte (1) nach Anspruch 8, **dadurch gekennzeichnet, dass** mehrere standardisierte Anschlusselemente (3a, 3b) in einer standardisierten symmetrischen Weise angeordnet sind.

10. Werkzeughalter (20) zum Halten eines Werkzeugs (21) eines Arbeitsplatzes (18) zur Herstellung eines elektronischen Gerätes (49) oder ähnlichem, umfassend einen Fuß (27) der zur Befestigung des Werkzeughalters (20) an einer Werkzeugplatte (1) ausgebildet ist, **dadurch gekennzeichnet, dass** der Fuß (27) komplementär zum Arbeitsplatzanschluss (4) einer Werkzeugplatte (1) nach einem der Ansprüche 1 bis 9 ausgebildet ist.

11. Andockstation (34) zum Tragen eines Arbeitsplatzes (18) zur Herstellung eines elektronischen Gerätes (49) oder ähnlichem, **dadurch gekennzeichnet, dass** die Andockstation (34) wenigstens einen Werkzeugplattenanschluss (40) aufweist, der zum Halten einer Werkzeugplatte (1) nach einem der Ansprüche 1 bis 9 ausgebildet ist.

12. Montageanlage (37) zur Herstellung eines elektronischen Gerätes (49) oder ähnlichem, **dadurch gekennzeichnet, dass** die Montageanlage (37) wenigstens eine Werkzeugplatte (1) nach einem der Ansprüche 1 bis 9, einen Werkzeughalter (20) nach Anspruch 10, und eine Andockstation (34) nach Anspruch 11 aufweist.

## Revendications

1. Plaque d'outillage (1) pour porter au moins un porte-outil (20) d'une station de travail (18) de fabrication d'un équipement électronique (49) ou similaire, comprenant un côté supérieur (2) qui est pourvu d'un adaptateur de station de travail (4), un côté inférieur (12) qui s'étend essentiellement parallèlement au côté supérieur (2) et est pourvu d'un adaptateur de station d'accueil (4a), dans laquelle la plaque d'outillage (1) est standardisée pour être utilisée dans au moins deux étages parmi un étage de prototypage (I), un étage de production de haute quantité entièrement automatique (III), et un étage de production de basse quantité semi-automatique (II), dans la fabrication de l'équipement électronique (49), la plaque d'outillage (1) comprenant un élément de verrouillage standardisé (9) à l'aide duquel elle peut être verrouillée dans une position de verrouillage prédéfinie (L) dans une station d'accueil (34), **caractérisée en ce que** l'élément de verrouillage (9) comprend un élément d'actionnement (11) pour déverrouiller l'élément de verrouillage (9), dont l'élément d'actionnement (11) peut être actionné de manière manuelle et/ou automatique, et **en ce que** l'élément d'actionnement (11) est formé comme un levier (11') ressortant de la plaque d'outillage (1).

2. Plaque d'outillage (1) selon la revendication 1, **caractérisée en ce que** l'adaptateur de station d'accueil (4a) comprend au moins un élément de guidage standardisé (13) définissant une direction de coulissement (S) de la plaque d'outillage (1), l'élément de guidage (13) pouvant coulisser sur un élément de contre-guidage (38) de la station d'accueil (34) dans la direction de coulissement (S).

3. Plaque d'outillage (1) selon la revendication 2, **caractérisée en ce que** l'élément de guidage (13) est formé comme une encoche (13') sur le côté inférieur (12), une extrémité (13b) de l'encoche (13') s'ouvrant vers un côté avant (8) de la plaque d'outillage (1).

4. Plaque d'outillage (1) selon l'une des revendications 1 à 3, **caractérisée en ce que** le levier (11') ressort d'un côté arrière (10) de la plaque d'outillage (1) dans une direction de coulissement vers l'extérieur (S_{off}) dans laquelle la plaque d'outillage (1) peut être coulissée hors de la station d'accueil (34).

5. Plaque d'outillage (1) selon la revendication 4, **caractérisée en ce que** l'élément de verrouillage (9) comprend un élément de verrouillage répétitivement verrouillable et déverrouillable (15) dans la position de verrouillage (L), l'élément de verrouillage (9) s'engrenant avec un élément de contre-verrouillage (39) formé sur la station d'accueil (34).

6. Plaque d'outillage (1) selon la revendication 5, **caractérisée en ce que** l'élément de verrouillage (15) est formé comme un cliquet (15').

7. Plaque d'outillage (1) selon l'une des revendications 1 à 6, **caractérisée en ce que** l'élément de verrouillage (9) forme un arrêt de butée (9') définissant au moins partiellement une position d'extrémité (E) de la plaque d'outillage (1).

8. Plaque d'outillage (1) selon la revendication 1, **caractérisée en ce que** l'adaptateur de station de travail (4) comprend au moins un élément adaptateur standardisé (3) sur le côté supérieur (2).

9. Plaque d'outillage (1) selon la revendication 8, **caractérisée en ce que** plusieurs éléments adaptateurs standardisés (3a, 3b) sont agencés de manière symétrique standardisée.

10. Porte-outil (20) pour porter un outil (21) d'une station de travail (18) de fabrication d'un équipement électronique (49) ou similaire, comprenant un pied (27) qui est adapté pour monter le porte-outil (20) sur une plaque d'outillage (1), **caractérisé en ce que** le pied (27) est formé de manière complémentaire à l'adaptateur de station de travail (4) d'une plaque d'outillage (1) conformément à l'une quelconque des revendications 1 à 9.

11. Station d'accueil (34) pour prendre en charge une station de travail (18) de fabrication d'un équipement électronique (49) ou similaire, **caractérisée en ce que** la station d'accueil (34) comprend au moins un adaptateur de plaque d'outillage (40) qui est adapté pour porter une plaque d'outillage (1) conformément à l'une quelconque des revendications 1 à 9.

12. Installation d'assemblage (37) de fabrication d'un équipement électronique (49) ou similaire, **caractérisée en ce que** l'installation d'assemblage (37) comprend au moins un élément parmi une plaque d'outillage (1) conformément à l'une quelconque des revendications 1 à 9, un porte-outil (20) selon la revendication 10, et une station d'accueil (34) selon la revendication 11.
